# EUROPEAN PATENT APPLICATION

(11) **EP 0 606 680 A1**
(43) Date of publication of application: **20.07.1994**
(21) Application number: 93203659.3
(22) Date of filing: 23.12.1993
(51) Int. Cl.: B62D 1/19

(54) **Collapsible steering column**

(30) Priority: 13.01.1993 GB 9300541
(71) Applicant: DELPHI FRANCE AUTOMOTIVE SYSTEMS, F-92231 Gennevilliers (FR)
(72) Inventor: Renevot, Jean-Luc, F-75017 Paris (FR)
(74) Representative: Denton, Michael John

(57) **Abstract**

A collapsible steering column assembly (12) for a vehicle comprises a collapsible steering column (34,36) and an energy absorber (100). The energy absorber (100) includes an inner tubular element (122) coupled to the vehicle steering wheel (14), an outer tubular element (124) fixed at an end nearest the steering wheel (14) to the vehicle fire wall (16) and receiving at least part of the inner tubular element (124). The inner tubular element (122) has an external diameter less than the internal diameter of the outer tubular element (124), thereby providing an annular gap (x) between the two tubular elements (122,124). A plurality of balls (142,144) are disposed in the annular gap (x) for deforming one or both of the tubular elements (122,124) on movement of the inner tubular element (122) into the outer tubular element (124). By this arrangement, the outer tubular element (124) is rigidly fixed, thereby increasing the rigidity and overall strength of the steering column assembly (12).

## Description

The present invention relates to a vehicle comprising a steering wheel coupled to a collapsible steering column assembly.

GB-1,159,058 discloses an energy absorber for a steering column which includes two telescopically collapsible tubular elements adapted to fit over a collapsible steering column. In a circumferential gap between the two tubular elements, there are provided a purality of metal balls disposed at regular intervals around the circumferential gap. The diameter of each ball is greater than the gap between the two tubular elements, such that as the tubular elements are moved together, the balls produce a series of grooves in the surfaces of the tubular elements, thereby absorbing energy.

As a result of current vehicle operating requirements, it has been found necessary to increase the strength of the energy absorber to increase its lateral rigidity against vibration and other forces imparted to the steering column during operation of the vehicle and during a collision. Although it is possible to increase the strength of the energy absorber by increasing the number of rows of balls and the separation between each row, the increase in strength is not always sufficient to meet current automotive requirements.

GB-1,200,437 discloses another type of energy absorber, which includes a deformable element disposed around a collapsible steering column. In some instances, this energy absorber does not provide sufficient rigidity to the steering column.

The present invention seeks to provide an improved collapsible steering column assembly.

According to an aspect of the present invention, there is provided a vehicle as specified in claim 1.

The arrangement of inner and outer tubular elements of the collapsible steering column assembly of the vehicle allows the inner tubular element to be fixed to a rigid vehicle structure at the junction between the two tubular elements. In this manner, the energy absorber provided can be made relatively rigid and strong.

Preferably, the energy absorber provided includes a supporting sleeve disposed in the annular gap and comprising one or more apertures therein, the or each aperture being adapted to support the deforming means. The supporting sleeve can be particularly useful in guiding the deforming means during collapse of the steering column assembly.

Advantageously, the deforming means includes two or more rows of deforming elements. The added rigidity and strength provided by this arrangement can allow the number of rows of deforming elements to be reduced in comparison with prior art arrangements.

In an embodiment, the deforming elements in one row are circumferentially offset relative to the deforming elements in the other row or rows. In this manner, each deforming element will absorb energy during an impact.

Preferably, the vehicle fixture is a fire wall separating the engine and passenger compartments of the vehicle.

An embodiment of the present invention is described below, by way of illustration only, with reference to the accompanying drawings, in which:
Figure 1 is a side elevational view of a prior art collaspible steering column assembly;
Figure 2 is a side elevational view, in partial cross-section, of a prior art energy absorber; and
Figure 3 is side elevational view, in cross-section, of an embodiment of collapsible steering column assembly.

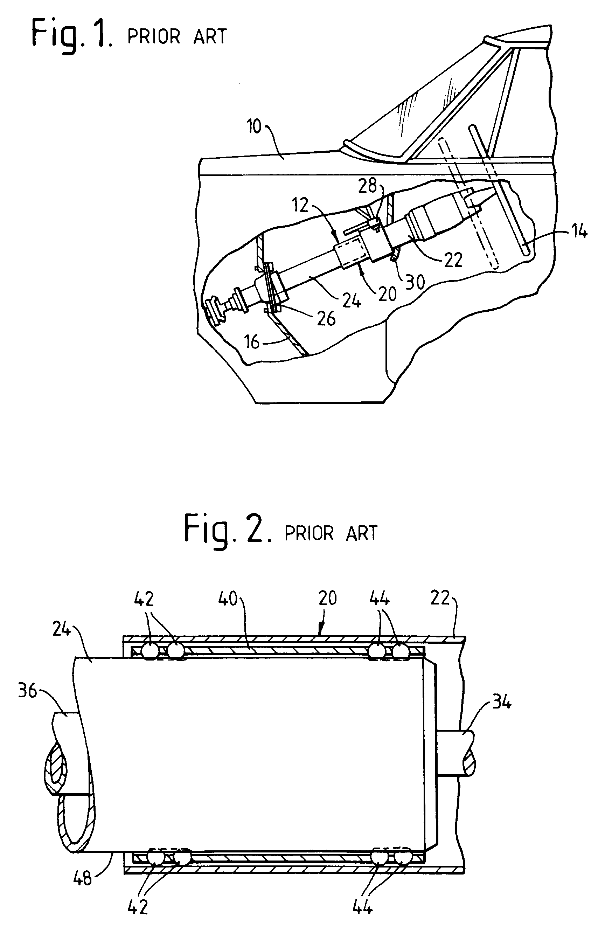

Referring to Figure 1, a prior art collapsible steering column assembly 12 is provided in a vehicle 10 for absorbing the driver's kinetic energy when the driver is thrown towards the vehicle dashboard (not shown) during a collision, thereby to cushion the impact experienced by the driver.

This prior art collapsible steering column assembly 12 includes a telescopically collapsible steering column formed of a first tubular element 36 which receives a rod 34 attached to the vehicle steering wheel. Surrounding the steering column 34,36 is an energy absorber 20 which includes an inner tubular element 24 and an outer tubular element 22.

The inner tubular element 24 is fixed, by means of a fixing plate 26, to a fire wall 16 which separates the passenger and engine compartments. The outer tubular element 22, which is coupled to the steering wheel 14, has an internal diameter larger than the external diameter of the inner tubular element 24 and fits partially over the inner tubular element 24. A supporting plate 30 supports the outer tubular element 22 in a slidable manner, while a second support 28 releasably supports the collapsible steering column assembly and is designed to rupture during a collision to allow collapse of the steering column assembly.

Referring to Figure 2, the inner and outer tubular elements 22,24 are designed so as in use to have an annular gap therebetween. Within the gap there is provided a plurality of metal balls 42,44 arranged in two pairs of rows. The balls in each row are spaced at regular intervals around the annular gap. A supporting sleeve 40 includes a plurality of circular apertures therein, each supporting a respective metal ball 42,44. The apertures in the supporting sleeve 40 are arranged such that each pair of rows of balls 42,44 is located at a respective end of the sleeve 40.

Each metal ball has a diameter greater than the size of the gap and a hardness greater than the hardness of the tubular elements 22,24.

The spacing between the two pairs of rows of metal balls 42,44 is chosen so as to give the energy absorber 20 sufficient rigidity and strength against vibration caused during operation of the vehicle 10.

During a collision, when the driver's body hits the steering wheel 14, the steering wheel 14 collapses towards the fire wall 16. In so doing, the energy absorber 20 is compressed, causing the two tubular elements 22,24 to slide telescopically within one another. As this occurs, the balls 42,44 plastically deform the tubes 22,24, absorbing the driver's kinetic energy, thereby cushioning the impact.

During such an impact, the inner tubular element 24 does not move, unless the impact is so great that the outer tubular element 22 reaches the end of its travel with sufficient kinetic energy to rupture the fixing plate 26.

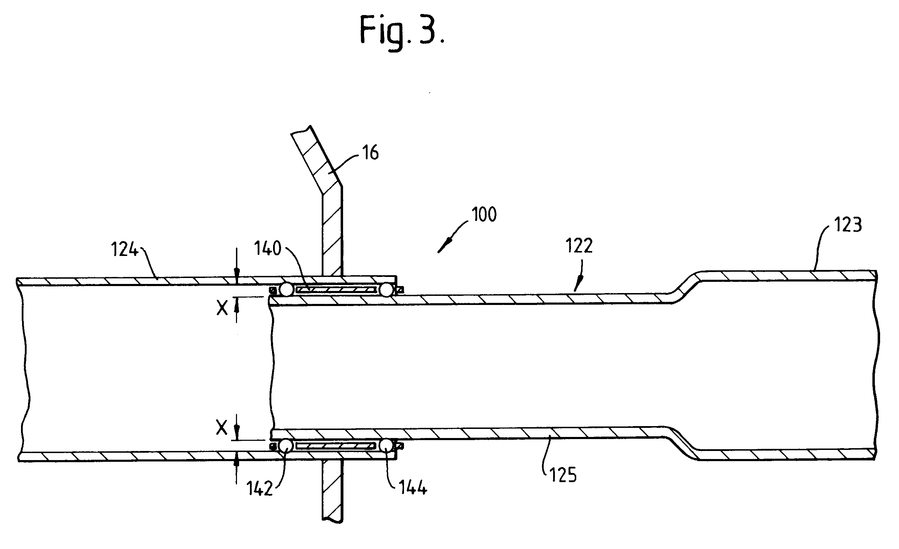

Referring now to Figure 3, there is shown an embodiment of energy absorber 100 which includes a first, inner tubular element 122 coupled to a vehicle steering wheel (not shown in Figure 3) and supported slidably in a supporting plate 30 and by a rupturable support 28 (best seen in Figure 1). The inner tubular element 122 includes, in this embodiment, a portion 123 of enlarged diameter which is connected to the steering wheel 14.

A second, outer tubular element 124 is fixed to the fire wall 16 which separates the engine and passenger compartments of the vehicle and extends a short way beyond the fire wall 16 towards the steering wheel 14. Although in this embodiment the outer tubular element 124 is fixed directly to the fire wall 16, it may be so fixed by means of a fixing plate similar to the fixing plate 26 shown in Figure 1.

The internal diameter of the outer tubular element 124 is greater than the external diameter of the inner tubular element 122 by an amount which provides an annular gap of width x between the two tubular elements 122,124. Disposed within the annular gap x there are provided two rows of metal balls 142,144 supported within circular apertures in a supporting sleeve 140. The apertures in the supporting sleeve 140 are located such that each row of balls 142,144 is located adjacent a respective end of the supporting sleeve 140.

Each metal ball has a diameter greater than the size of the gap and a hardness, in this embodiment, at least two and a half times the hardness of the tubular elements 122,124. The balls in the two rows 142,144 are circumferentially offset from one another so as to ensure that no ball travels in a track previously formed by another ball.

Since the outer tubular element 124 is fixed to the fire wall 16 at its end closest to the steering wheel 14, this part of the energy absorber is substantially rigid and provides a rigid support for the inner tubular element 122, thereby increasing the overall rigidity and strength of the energy absorber 100. If additional strength or rigidity is required, this can be readily provided by increasing the strength and rigidity of the fire wall 16.

If the vehicle is involved in a collision which causes the driver to hit the steering wheel 14 with a force above a predetermined minimum force, the support 28 ruptures and the steering wheel 14 collapses towards the fire wall 16. In so doing, the energy absorber 120 is compressed, causing the inner tubular element 122 to slide telescopically within the outer tubular element 124. As this occurs, the balls 142,144 plastically deform the tubes 122,124, forming grooves therein. This deformation absorbs the driver's kinetic energy, thereby cushioning the impact.

It will be apparent that the outer tubular element 124 extends into the engine compartment by an amount sufficient to accomodate the movement of the balls 142,144 during collapse of the steering column assembly 100.

During such an impact, the outer tubular element 124 does not move, unless the impact is so great that the inner tubular element 122 reaches the end of its travel with sufficient kinetic energy to rupture the connection between the outer tubular element 124 and the fire wall 16.

The increased rigidity and strength provided by the location of the outer tubular element 124 generally results in the need for only two rows of metal balls 142,144. However, in some applications, a greater number of rows of metal balls 142,144 may be provided at appropriate locations in the supporting sleeve 140.

In alternative embodiments, the metal balls 142,144 could be replaced by any other suitable tube-deforming elements, for example a series of protrusions on one of the tubular elements. Where balls are provided, these could be of any suitable material.

The disclosures in British patent application no. 9300541.1, from which this application claims priority, and in the abstract accompanying this application are incorporated herein by reference.

## Claims

1. A vehicle comprising a steering wheel coupled to a collapsible steering column assembly, which steering column assembly includes a collapsible steering column and an energy absorber (100); the energy absorber including an inner tubular element (122) coupled to the vehicle steering wheel, an outer tubular element (124) fixed to a fixture (16) of the vehicle and receiving at least part of the inner tubular element, an annular gap being provided between the inner and outer tubular elements, and a plurality of deforming means (142,144) disposed in the annular gap for deforming one or both of the tubular elements on movement of the inner tubular element into the outer tubular element, the deforming means being disposed proximate the vehicle fixture.

2. A vehicle according to claim 1, wherein the energy absorber includes a supporting sleeve (140) disposed in the annular gap and comprises one or more apertures therein, the or each aperture being adapted to support the deforming means.

3. A vehicle according to claim 2, wherein the deforming means includes two or more rows of deforming elements.

4. A vehicle according to claim 3, wherein the deforming elements in one row are circumferentially offset relative to the deforming elements in the other row or rows.

5. A vehicle according to claim 3 or 4, wherein the deforming elements are balls.

6. A vehicle according to any preceding claim, wherein the vehicle fixture (16) is a fire wall separating the engine and passenger compartments of the vehicle.
